# EUROPEAN PATENT APPLICATION

(11) **EP 3 225 534 A1**
(43) Date of publication of application: **04.10.2017**
(21) Application number: 17160066.1
(22) Date of filing: 09.03.2017
(51) Int. Cl.: B63H 23/26, B63H 23/08, G01S 13/88, G05D 1/00, G08G 3/02, B63B 49/00, B63H 23/30, B63H 23/02

(54) **WATERCRAFT STEERING SYSTEM AND WATERCRAFT**

(30) Priority: 31.03.2016 JP 2016072227
(71) Applicant: Kanzaki Kokyukoki Mfg. Co., Ltd., Hyogo 661-0981 (JP)
(72) Inventor: NAKAGAWA, Shigeaki, Amagasaki-shi, Hyogo 6610981 (JP)
(74) Representative: Isarpatent

(57) **Abstract**

The present invention provides a watercraft steering system that assists in safe navigation in waters with many collision objects, and a watercraft.

[Means of Realizing the Object]

The present invention includes a reverse reduction transmission 11 for converting a power from a main engine 10 to an output for causing a watercraft to make forward travel, neutral, or reverse travel, so as to control navigation of the watercraft 1. The watercraft steering system includes a plurality of obstacle detectors 45, which detect an obstacle 70. The obstacle detectors 45 are disposed at a hull 2 of the watercraft 1. Upon detecting an obstacle 70 located approximately in the travel direction of the watercraft 1, the system reverses the rotational output of the reverse reduction transmission 11 and changes the travel speed of the watercraft 1 to a travel speed according to the distance between the hull 2 and the obstacle 70 and according to the travel speed of the watercraft 1, so as to stop the hull 2.

## Description

### [Technical Field]

The present invention relates to a watercraft steering system for assisting in navigation of watercrafts and to a watercraft including the watercraft steering system.

### [Background Art]

In recent years, watercrafts such as pleasure boats have been increasingly employing a high-revolution engine. When watercrafts of this type are to be navigated by low speed navigation, for example in trolling, a low rotational speed is necessary. However, driving a high-revolution engine at a low rotational speed can result in hunting or engine stalling. One technique to address this is to perform low speed navigation by slippingly engaging a hydraulic clutch, disposed between the engine and the propeller shaft, and thereby rotating the propeller at a low rotational speed while maintaining the engine at a predetermined rotational speed (see Patent Document 1, for example).

Also, heretofore, auto-pilot technologies have been provided to enable automated watercraft navigation along a pre-planned route. The technologies include ascertaining the location of the watercraft by receiving radio waves from a global positioning system (GPS) satellite and performing watercraft steering according to a planned route with reference to an electronic chart (see Patent Document 2, for example).

### [Related Art Documents]

### [Patent Documents]

[Patent Document 1] Japanese Unexamined Utility Model Application Publication No. H06-078637
[Patent Document 2] Japanese Unexamined Patent Application Publication No. 2002-090171

### [Disclosure of the Invention]

### [Problems to be Solved by the Invention]

In automated navigation of a watercraft using an auto-pilot technology such as one disclosed in Patent Document 2, avoidance of obstacles during the automated navigation is difficult in, for example, straits with many rocks, and ports where many watercrafts arrive and depart. Thus, in such cases, manual navigation is implemented by the operator. Even with manual navigation by an operator, avoidance of collision objects during navigation in waters with many collision objects requires a high level of skill of the operator.

### [Means of Solving the Problems]

An object of the present invention is to provide a watercraft steering system improved in view of the circumstances described above and a watercraft including the same.

A watercraft steering system according to the present invention includes a reverse reduction transmission and a plurality of obstacle detectors. The reverse reduction transmission is configured to convert power from a main engine into an output for causing a watercraft to make forward travel, neutral, or reverse travel, so as to control navigation of the watercraft. The plurality of obstacle detectors are disposed at a hull of the watercraft and configured to detect an obstacle. The watercraft steering system is configured to, based on a location of the obstacle with respect to the hull, a travel direction of the watercraft, a travel speed of the watercraft, and a distance between the hull and the obstacle, select from among the forward travel, the neutral, and the reverse travel, and maintain the travel speed or change the travel speed.

The watercraft steering system may be configured as follows: when the obstacle is detected to be approximately in the travel direction of the watercraft, the watercraft steering system reverses a rotational output of the reverse reduction transmission and changes the travel speed of the watercraft to a travel speed according to the distance between the hull and the obstacle and according to the travel speed of the watercraft, so as to stop the hull.

The watercraft steering system may be configured as follows: when the distance between the hull and the obstacle located approximately in the travel direction of the watercraft is greater than a predetermined distance, the watercraft steering system stops the hull by reversing the output of the reverse reduction transmission and performing low speed navigation, the low speed navigation allowing the watercraft to travel at a low speed.

The watercraft steering system may be configured as follows: when the distance between the hull and the obstacle located approximately in the travel direction of the watercraft is less than a predetermined distance and the travel speed of the watercraft is greater than a predetermined speed, the watercraft steering system stops the hull by reversing the output of the reverse reduction transmission and performing normal navigation, the normal navigation allowing the watercraft to travel at a high speed.

The watercraft steering system may be configured as follows: the reverse reduction transmission comprises a forward-reverse switching mechanism configured to convert the power from the main engine into an output for causing the watercraft to make forward travel, neutral, or reverse travel in normal navigation, and a low speed navigation mechanism configured to set an output for causing the watercraft to make forward travel, neutral, or reverse travel in low speed navigation.

The watercraft steering system may further include a GPS unit configured to identify a location of the watercraft via satellite communication, and the watercraft steering system, with reference to a predetermined route, may control the main engine and the reverse reduction transmission so as to navigate the watercraft at a travel speed, the travel speed being a travel speed of the watercraft at the location detected by the GPS unit. [0014] The embodiment of the present invention assists in watercraft steering operation when manual navigation or automated navigation is being performed, by implementing collision avoidance control of identifying an obstacle and stopping the hull, and accordingly, avoids collision with an obstacle with certainty even in waters with many obstacles or at ports where many arrivals and departures occur. Thus, the present invention improves ease of operation for the operator and in addition enables accident-free automated navigation.

A watercraft according to the present invention includes a controller in a hull, and the controller includes one of the watercraft steering systems described above.

### [Effects of the Invention]

The embodiment of the present invention assists in watercraft steering operation when manual navigation or automated navigation is being performed, by implementing collision avoidance control of identifying an obstacle and stopping the hull, and accordingly, avoids collision with an obstacle with certainty even in waters with many obstacles or at ports where many arrivals and departures occur. Thus, the present invention improves ease of operation for the operator and in addition enables accident-free automated navigation.

The embodiment of the present invention changes the travel speed for stopping the hull based on the distance to an obstacle. As a result, in the case where the distance to the obstacle is large, optimal watercraft steering operation is achieved based on the travel mode of the watercraft and its positional relationship with the obstacle. On the other hand, in the case where the distance to the obstacle is small, collision with the obstacle is avoided by an emergency action, namely by quickly stopping the hull, and therefore safe navigation is achieved.

The embodiment of the present invention changes the travel speed for stopping the hull based on the travel speed of the watercraft. Thus, in the case where the travel speed is low and the watercraft is approaching an obstacle slowly, optimal watercraft steering operation is achieved based on the travel mode of the watercraft and its positional relationship with the obstacle. On the other hand, in the case where the travel speed is high and the watercraft is approaching an obstacle quickly, collision with the obstacle is avoided by an emergency action, namely by quickly stopping the hull, and therefore safe navigation is achieved.

### [Brief Description of the Drawings]

[FIG. 1] FIG. 1 is a schematic side view of a pleasure boat including a watercraft steering system according to a first embodiment;
[FIG. 2] FIG. 2 is a perspective view of a reverse reduction transmission;
[FIG. 3] FIG. 3 is a skeleton diagram illustrating the power transmission system of the reverse reduction transmission;
[FIG. 4] FIG. 4 is a functional block diagram of the pleasure boat;
[FIG. 5] FIG. 5 is a diagram illustrating locations where radar units are installed in the hull; [FIG. 6] FIG. 6 is a diagram illustrating an exemplary route for automated navigation;
[FIG. 7] FIG. 7 is a flowchart illustrating an operation of collision avoidance control by the watercraft steering system according to the first embodiment;
[FIG. 8] FIG. 8 is a flowchart illustrating an operation of collision avoidance control by a watercraft steering system according to a second embodiment;
[FIG. 9] FIG. 9 is a flowchart illustrating an operation of collision avoidance control by a watercraft steering system according to a third embodiment; and
[FIG. 10] FIG. 10 is a skeleton diagram illustrating the power transmission system of a reverse reduction transmission of a different configuration.

### [Modes for Carrying out the Invention]

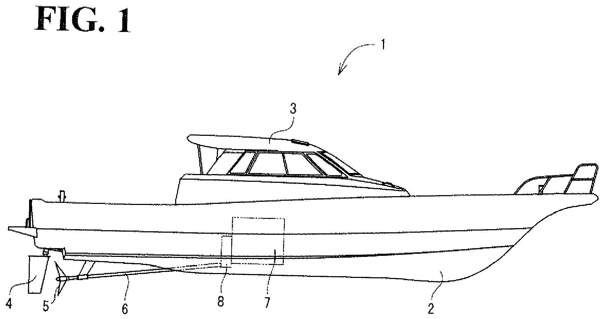

The first embodiment, which is a specific embodiment of the present invention, will now be described with reference to the drawings (FIGs. 1 through 7). As illustrated in FIG. 1, a pleasure boat 1, which is a watercraft, includes a hull 2, a cabin 3, a rudder 4, and a propeller 5. The cabin 3 is disposed approximately at the center of the upper surface of the hull 2. The rudder 4 is disposed adjacent to the stem at the bottom of the hull 2. The propeller 5 is disposed adjacent to the stem and forward of the rudder 4 at the bottom of the hull 2. A steering unit is provided in the cabin 3. A propulsion shaft 6 (propeller shaft), which rotates the propeller 5, is supported adjacent to the stem at the bottom of the hull 2. The propeller 5 is attached to the distal end of the propulsion shaft 6.

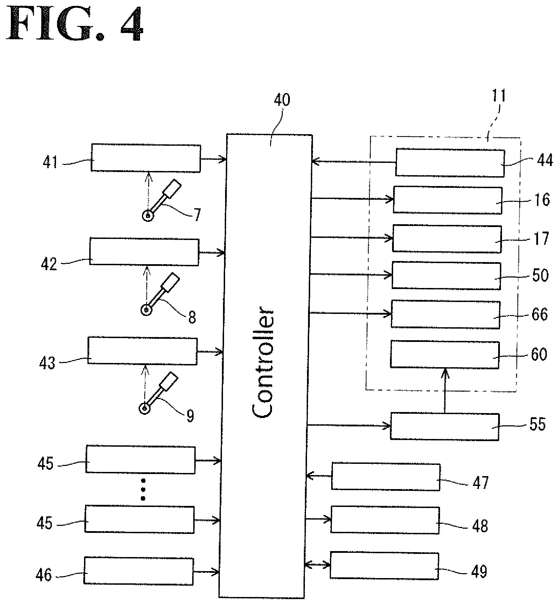

Although not illustrated in detail, in the cabin 3, there are provided a steering wheel, a forward-reverse lever 7 (see FIG. 4), a trolling lever 8 (see FIG. 4), and a throttle lever 9 (see FIG. 4). The steering wheel is provided to steer the hull 2 to change its travel direction to left and right. The forward-reverse lever 7 is a forward-reverse maneuvering device for switching the travel direction of the hull 2 between forward travel and reverse travel. The trolling lever 8 is a low speed navigation maneuvering device for low speed navigation of the hull 2. The throttle lever 9 is a speed adjustment device for setting and retaining the output rotational speed of an engine 10, which is described below. The devices described above may not necessarily be of a lever type but be of a different type such as a dial type.

In the hull 2, there are provided the engine 10 and a reverse reduction transmission 11. The engine 10 is a main engine serving as a drive source for the propeller 5. The reverse reduction transmission 11 is used to transmit the rotational power from the engine 10 to the propeller 5 via the propulsion shaft 6. The propeller 5 is rotationally driven by the rotational power transmitted from the engine 10 to the propulsion shaft 6 via the reverse reduction transmission 11.

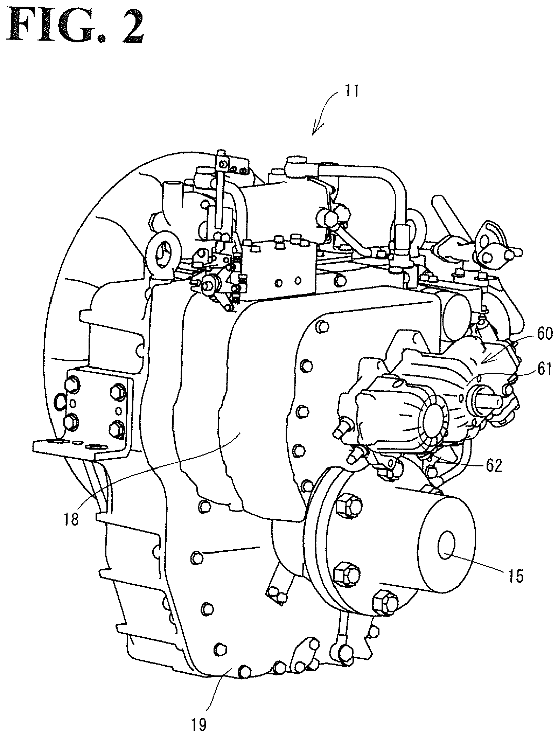

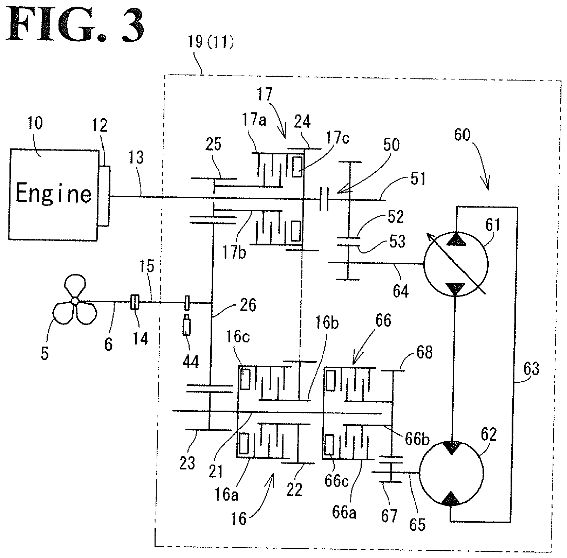

As illustrated in FIGs. 2 and 3, the reverse reduction transmission 11 includes an input shaft 13, an output shaft 15, a forward clutch 16, a reverse clutch 17, and a hydrostatic transmission 60 (HST). The input shaft 13 is coupled to a flywheel 12 of the engine 10. The output shaft 15 is coupled to the propulsion shaft 6 via a coupling 14. The forward clutch 16 transmits and interrupts a forward driving force from the input shaft 13 to the output shaft 15. The reverse clutch 17 transmits and interrupts a reverse driving force from the input shaft 13 to the output shaft 15. The hydrostatic transmission 60 includes a hydraulic pump 61 and a hydraulic motor 62.

The input shaft 13 and the output shaft 15 protrude from the housing 19 of the reverse reduction transmission 11. The input shaft 13 is rotatably supported at an upper portion of the front of the housing 19. The output shaft 15 is rotatably supported at a lower portion of the back of the housing 19 (FIG. 2 illustrates only the side where the output shaft 15 is located). The forward-reverse switching mechanism 18, which includes the forward clutch 16 and the reverse clutch 17, is accommodated in the housing 19 of the reverse reduction transmission 11. In the housing 19, the hydraulic pump 61 and the hydraulic motor 62 are mounted above the output shaft 15. The hydraulic pump 61 and the hydraulic motor 62 constitute the hydrostatic transmission 60, which is described below.

The forward clutch 16 and the reverse clutch 17 are hydraulic friction clutches of the multi-disc wet type. The forward clutch 16 is disposed about the forward clutch shaft 21, which extends approximately parallel to the input shaft 13. The forward clutch 16 includes steel plates and friction plates that are alternately disposed. The forward clutch 16 includes a forward outer casing 16a, a forward inner hub 16b, and a forward clutch cylinder 16c. The forward outer casing 16a includes the steel plates. The forward inner hub 16b includes the friction plates, which can be pressed against the steel plates. The forward clutch cylinder 16c generates pressing force by hydraulic pressure. The forward outer casing 16a is secured to the forward clutch shaft 21. The forward inner hub 16b is rotatably fitted around the forward clutch shaft 21. The forward inner hub 16b is inserted, at its one end, to the inner circumference of the forward outer casing 16a. A forward gear 22 is integrally formed at the outer circumference of the forward inner hub 16b. A forward reduction gear 23 is secured to the forward clutch shaft 21.

The reverse clutch 17 is disposed about the input shaft 13 and, as with the forward clutch 16, includes steel plates and friction plates that are alternately disposed. The reverse clutch 17 includes a reverse outer casing 17a, a reverse inner hub 17b, and a reverse clutch cylinder 17c. The reverse outer casing 17a includes the steel plates. The reverse inner hub 17b includes the friction plates, which can be pressed against the steel plates. The reverse clutch cylinder 17c generates pressing force (clutch pressure) by hydraulic pressure. The reverse outer casing 17a is secured to the input shaft 13. The reverse inner hub 17b is rotatably fitted around the input shaft 13. The reverse inner hub 17b is inserted, at its one end, to the inner circumference of the reverse outer casing 17a. A relay gear 24 is integrally formed at the outer circumference of the reverse outer casing 17a. A reverse reduction gear 25 is integrally formed at the other end of the reverse inner hub 17b.

The relay gear 24 constantly meshes with the forward gear 22 of the forward clutch 16. The forward reduction gear 23 and the reverse reduction gear 25 constantly mesh with a reduction output gear 26, which is secured to a portion of the output shaft 15 within the housing 19 of the reverse reduction transmission 11. The forward reduction gear 23, the reverse reduction gear 25, and the reduction output gear 26 constitute a reduction gear mechanism with a fixed reduction ratio. The rotational power of the output shaft 15 is reduced by the reduction gears 23 and 25 and the output gear 26 at a fixed reduction ratio.

The reverse reduction transmission 11 includes the hydrostatic transmission 60, which serves as a drive source for low speed navigation, i.e., for causing the output shaft 15 to rotate at a low speed. The hydrostatic transmission 60 includes the hydraulic pump 61, which is of the variable displacement type, and the hydraulic motor 62, which is of the fixed displacement type. The hydraulic pump 61 and the hydraulic motor 62 are fluidly coupled to each other via a closed hydraulic circuit 63. By changing the swash plate angle of the hydraulic pump 61, the flow and the flow rate of the hydraulic oil discharged from the hydraulic pump 61 can be changed. By this means, switching between a forward travel mode (forward rotation of the hydraulic motor 62), a reverse travel mode (reverse rotation of the hydraulic motor 62), and a neutral mode can be carried out, and also adjustment of the motor rotational speed of the hydraulic motor 62, i.e., the rotational speed of the propeller 5, can be carried out. Although not illustrated in detail, an oil feed passage is coupled to the closed hydraulic circuit 63 via a check valve, and thus hydraulic oil can be supplied to the closed hydraulic circuit 63 through the oil feed passage. The hydraulic motor 62 may be of the variable displacement type.

The input shaft 13 is disconnectably and reconnectably coupled to a relay shaft 51 via a relay clutch 50. An input-side speed increasing gear 52 is secured to the relay shaft 51. An output-side speed increasing gear 53 is secured to a pump input shaft 64 of the hydraulic pump 61. By meshing of the output-side speed increasing gear 53 with the input-side speed increasing gear 52, the rotational power from the input shaft 13 is transmitted to the hydraulic pump 61 via the relay shaft 51, the input-side speed increasing gear 52, and the output-side speed increasing gear 53 once the relay clutch 50 is engaged.

An HST input-side gear 67 is secured at the distal end of a motor output shaft 65 of the hydraulic motor 62. The forward clutch shaft 21 is disconnectably and reconnectably coupled to the HST input-side gear 67 via an HST clutch 66. The HST clutch 66 is a hydraulic friction clutch of the multi-disc wet type. The HST clutch 66 is disposed about the forward clutch shaft 21 and includes steel plates and friction plates that are alternately disposed. The hydrostatic transmission 60 and the HST clutch 66 constitute a low speed navigation mechanism. The low speed navigation mechanism sets an output for causing the watercraft to make forward travel, neutral, or reverse travel in low speed navigation.

The HST clutch 66 includes an HST outer casing 66a, an HST inner hub 66b, and an HST clutch cylinder 66c. The HST outer casing 66a includes the steel plates. The HST inner hub 66b includes the friction plates, which can be pressed against the steel plates. The HST clutch cylinder 66c generates pressing force by hydraulic pressure. The HST outer casing 66a is secured to the forward clutch shaft 21. The HST inner hub 66b is rotatably fitted around the forward clutch shaft 21. The HST inner hub 66b is inserted, at its one end, to the inner circumference of the HST outer casing 66a. An HST output-side gear 68 is integrally formed at the outer circumference of the HST inner hub 66b. The HST output-side gear 68 meshes with the HST input-side gear 67.

By manipulating the forward-reverse lever 7 in the cabin 3 for forward travel, reverse travel or neutral, the destination to which the hydraulic oil is to be delivered can be switched to the forward clutch 16 (forward clutch cylinder 16c), the reverse clutch 17 (reverse clutch cylinder 17c), or neutral. When both the forward clutch 16 and the reverse clutch 17 have been placed in a disengaged state by manipulating the forward-reverse lever 7 for neutral, the watercraft 1 is placed in the neutral mode, in which the rotational power from the engine 10 is not transmitted to the output shaft 15.

When the forward clutch 16 has been placed in an engaged state by manipulating the forward-reverse lever 7 for forward travel (when the steel plates of the forward outer casing 16a and the friction plates of the forward inner hub 16b are pressed against each other by hydraulic pressure), the rotational power from the engine 10 is transmitted, through the relay gear 24 of the input shaft 13, the forward gear 22, the forward clutch 16, and the forward reduction gear 23, to the reduction output gear 26, with the reverse clutch 17 being in the disengaged state. As a result, the watercraft 1 is placed in the forward travel mode, in which the rotational power from the engine 10 is transmitted to the output shaft 15 as an output for forward direction. Adjustment of the forward travel speed of the watercraft 1 in normal navigation is carried out using the throttle lever 9 in the cabin 3.

When the reverse clutch 17 has been placed in an engaged state by manipulating the forward-reverse lever 7 for reverse travel, the rotational power from the engine 10 is transmitted, through the input shaft 13, the reverse clutch 17, and the reverse reduction gear 25, to the reduction output gear 26, with the forward clutch 16 being in the disengaged state. As a result, the watercraft 1 is placed in the reverse travel mode, in which the rotational power from the engine 10 is transmitted to the output shaft 15 as an output for reverse direction. Adjustment of the reverse travel speed of the watercraft 1 in normal navigation is also carried out using the throttle lever 9.

When either the forward clutch 16 or the reverse clutch 17 is in the engaged state, at least the HST clutch 66 is in a disengaged state and therefore the power from the hydraulic motor 62 in the hydrostatic transmission 60 is not transmitted to the output shaft 15. Also, the relay clutch 50 may be placed in a disengaged state to disconnect the input shaft 13 from the relay shaft 51 and thereby to interrupt power transmission to the hydraulic pump 61 in the hydrostatic transmission 60. As a result, when power output via the hydrostatic transmission 60 is unnecessary in normal navigation, the load imposed on the engine 10 can be reduced and consequently the fuel economy can be improved.

By manipulating the trolling lever 8 in the cabin 3 for forward or reverse travel, the relay clutch 50 and the HST clutch 66 can be placed in an engaged state, and via a swash plate controller 55 (see FIG. 4), which may be an actuator for example, the swash plate angle of the hydraulic pump 61 can be changed and adjusted. By changing and adjusting the swash plate angle of the hydraulic pump 61, the rotational speed and rotational direction of the hydraulic motor 62 can be changed to cause the output shaft 15, and eventually the propeller 5, to rotate at a low speed in a forward or reverse direction. By manipulating the trolling lever 8 for neutral, the HST clutch 66 can be placed in the disengaged state, and via the swash plate controller 55, the swash plate angle of the hydraulic pump 61 can be changed to zero to stop the output of the hydraulic motor 62. By this means, power transmission to the output shaft 15 and eventually to the propeller 5 can be stopped.

When both the forward clutch 16 and reverse clutch 17 have been placed in the disengaged state by manipulating the forward-reverse lever 7 for neutral, the relay clutch 50 and the HST clutch 66 can be switched to the engaged state by manipulating the trolling lever 8 for forward or reverse travel. That is, the relay clutch 50 and the HST clutch 66 can be switched to the engaged state when the forward-reverse switching mechanism 18 is in a neutral mode. When either the forward clutch 16 or the reverse clutch 17 has been placed in the engaged state by manipulating the forward-reverse lever 7 for forward or reverse travel, at least the HST clutch 66 is not allowed to be switched to the engaged state even if the trolling lever 8 is manipulated for forward or reverse travel. That is, in the case where the forward-reverse switching mechanism 18 is in a mode other than the neutral mode, at least the HST clutch 66 is placed in the disengaged state.

By manipulating the trolling lever 8 for forward or reverse travel with the forward-reverse lever 7 being in the neutral mode, the relay clutch 50 and the HST clutch 66 can be placed in the engaged state. This allows rotational power from the engine 10 to be transmitted to the relay shaft 51 through the relay clutch 50 to cause the input-side speed increasing gear 52 and the output-side speed increasing gear 53 to cooperate with each other and thereby cause the pump input shaft 64 of the hydraulic pump 61 to rotate. Accordingly, the swash plate controller 55 operates according to the actuation amount of the trolling lever 8 to adjust the swash plate angle of the hydraulic pump 61 and thereby implements control of the rotational speed or switching between forward and reverse rotations, of the hydraulic motor 62.

The rotational power of the hydraulic motor 62 is transmitted to the HST inner hub 66b of the HST clutch 66 through the HST input-side gear 67 and the HST output-side gear 68. Since the HST clutch 66 is in the engaged state, the forward clutch shaft 21 together with the HST outer casing 66a acts as a trolling clutch shaft and rotates in forward and reverse directions. The forward reduction gear 23 of the forward clutch shaft 21 acts as a trolling clutch gear to allow the rotational power transmitted from the hydraulic motor 62 to the forward clutch shaft 21 to be transmitted to the reduction output gear 26. As a result, the watercraft 1 is placed in a forward or reverse low speed navigation mode, in which the rotational power of the hydraulic motor 62 is transmitted, as an output for low speed rotation in a forward or reverse direction, to the output shaft 15, the propulsion shaft 6 and eventually to the propeller 5.

As illustrated in FIG. 4, the watercraft 1 includes a controller 40. The controller 40 mainly controls the general operations of the engine 10 and the reverse reduction transmission 11. Although not illustrated in detail, the controller 40 includes a CPU, a ROM, a RAM, and a communication interface, for example. The CPU performs various calculations and controls, the ROM stores control programs and data, and the RAM temporarily stores control programs and data.

The input of the controller 40 is electrically coupled to a forward-reverse potentiometer 41, a trolling potentiometer 42, a throttle potentiometer 43, a rotation sensor 44, a plurality of radar units 45, and a GPS (global positioning system) unit 46. The forward-reverse potentiometer 41 senses the actuated position of the forward-reverse lever 7. The trolling potentiometer 42 senses the actuated position of the trolling lever 8. The throttle potentiometer 43 senses the actuated position of the throttle lever 9. The rotation sensor 44 senses the output rotational speed of the output shaft 15. The plurality of radar units 45 are disposed on the outer periphery of the hull 2, e.g., at the bow, the sides, and the stem. The GPS unit 46 determines the location of the hull 2 by receiving radio waves from a GPS satellite. The output of the controller 40 is electrically coupled to the forward clutch 16, reverse clutch 17, relay clutch 50, and HST clutch 66 in the reverse reduction transmission 11 and to the swash plate controller 55 for changing the swash plate angle of the hydraulic pump 61 in the hydrostatic transmission 60.

The controller 40, which is provided with the watercraft steering system, is electrically coupled to input interfaces 47 such as a keyboard, a mouse, and operation buttons, and an output interface 48 such as a display. The operator can input a route R of the watercraft 1 to the controller 40 by manipulating the input interfaces 47, and can ascertain the location of the hull 2, the travel speed, and the orientation of the bow with reference to the route R on the display screen of the output interface 48. The controller 40 is communicable with external devices 49 such as a personal computer and external memory, and via the external devices 49, the route R of the watercraft 1 can be input into the controller 40.

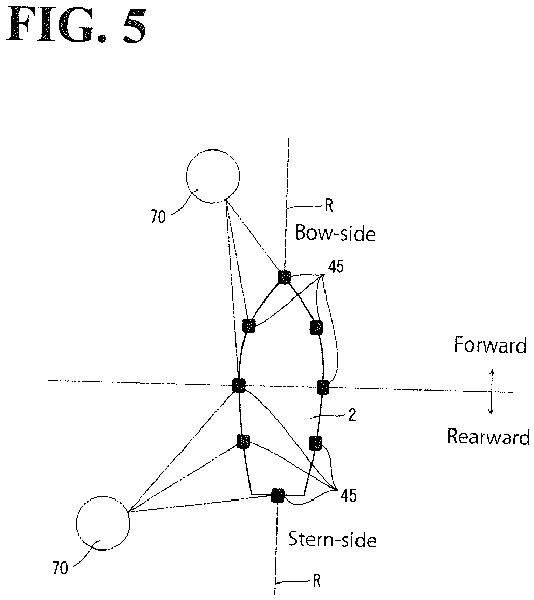

The radar units 45 are obstacle detectors, and as illustrated in FIG. 5, are disposed on the outer periphery of the hull 2, e.g., at the bow, the sides, and the stem of the watercraft 1. Based on echoes of radar waves transmitted outward from the hull 2, the radar units 45 measure the distance between the hull 2 and an obstacle 70 and in addition the speed at which the watercraft 1 is approaching the obstacle 70. The radar units 45 may be millimeter wave radar units, for example. The use of millimeter wave radar units reduces the influence of the external environment even in bad weather, and also enables high-precision measurement of the speed of the watercraft 1 relative to the obstacle 70 because of the large Doppler shift.

In the case where manual navigation has been selected by the input interface 47, the controller 40 controls the forward and reverse travel and the travel speed of the hull 2 as follows. In accordance with the output signals from the potentiometers 42 to 44 generated by manipulation of the levers 7 to 9 as described above, the controller 40 controls engagement and disengagement of the forward clutch 16, the reverse clutch 17, the relay clutch 50, and the HST clutch 66, the amount of fuel injection to the engine 10, and the swash plate angle of the hydraulic pump 61, for example. Although not illustrated, the controller 40 receives a steering angle from the steering wheel and alters the angle of the rudder 4 according to the steering angle, and in this manner, the controller 40 adjusts the travel direction of the hull 2 in accordance with the amount of actuation of the steering wheel.

In the case where automated navigation has been selected by the input interface 47, the controller 40 controls the forward and reverse travel and the travel speed of the hull 2 as follows. In order to carry out navigation according to the previously input route R at a predetermined travel speed, the controller 40 ascertains the location of the hull 2 based on a previously stored electronic chart and on positioning information from the GPS unit 46, and controls engagement and disengagement of the forward clutch 16, the reverse clutch 17, the relay clutch 50, and the HST clutch 66, the amount of fuel injection to the engine 10, and the swash plate angle of the hydraulic pump 61, for example. Although also not illustrated, the controller 40, based on the route R, ascertains a travel direction corresponding to the location of the hull 2 and accordingly controls the orientation of the rudder 4. In this manner, the controller 40 adjusts the travel direction of the hull 2 to carry out navigation according to the predetermined route R.

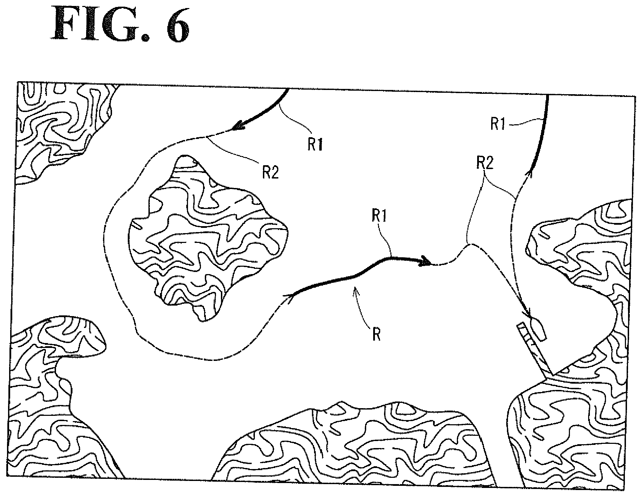

In the case where automated navigation is being performed according to the route R, illustrated in FIG. 6, the controller 40 places at least the HST clutch 66 in the disengaged state upon determining, based on the positioning information from the GPS unit 46, that the hull 2 is located on a normal navigation route R1, on which normal navigation is to be performed. Further, in accordance with a travel direction and travel speed of the watercraft 1, which have been determined according to the location of the hull 2 on the normal navigation route R1, the controller 40 places either the forward clutch 16 or the reverse clutch 17 in the engaged state and sets a rotational speed of the engine 10 by adjusting the amount of fuel injection to the engine 10. In this process, the controller 40 sets the swash plate angle of the hydraulic pump 61 to neutral via the swash plate controller 55.

In the case where the controller 40 has determined, based on the positioning information from the GPS unit 46, that the hull 2 is located on a low speed navigation route R2, on which low speed navigation is to be performed, the controller 40 places both the forward clutch 16 and the reverse clutch 17 in the disengaged state and places both the relay clutch 50 and the HST clutch 66 in the engaged state. Further, in accordance with a travel direction and travel speed of the watercraft 1, which have been determined according to the location of the hull 2 on the low speed navigation route R2, the controller 40 sets a swash plate angle of the hydraulic pump 61 via the swash plate controller 55.

The controller 40 performs collision avoidance control for avoiding collision with an obstacle 70 in the surroundings of the hull 2. In this operation, in the case where the controller 40 has detected that the obstacle 70 is located approximately in the travel direction of the watercraft 1, the controller 40 reverses the travel direction (rotational output of the reverse reduction transmission 11) of the watercraft 1 and changes the travel speed of the watercraft 1 to a travel speed according to the distance between the hull 2 and the obstacle 70 and according to the travel speed of the watercraft 1, so as to stop the hull 2. By the collision avoidance control, the controller 40 assists in watercraft steering operation when manual navigation or automated navigation is being performed, and accordingly, avoids collision with an obstacle 70 with certainty even in waters with many obstacles 70 or at ports where many arrivals and departures occur. Thus, ease of operation for the operator is improved and also accident-free automated navigation is made possible.

Furthermore, not only the operating mode, namely forward travel, reverse travel, or neutral, but also the travel speed for normal navigation or low speed navigation can be set based on the positional relationship between the hull 2 and the obstacle 70, the distance to the obstacle 70, the travel direction, and the travel speed. As a result, in the case where, for example, the location of the hull 2 is to be maintained at a fixed point location by switching from low speed navigation, collision with an obstacle 70 such as a floating object is minimized, when the obstacle 70 has appeared in the surroundings of the hull 2, while maintaining the location of the hull 2 at the fixed point location.

In this operation, in the case where the distance between the hull 2 and the obstacle 70 located approximately in the travel direction of the watercraft 1 is greater than a predetermined distance *Dth*, the controller 40 stops the hull 2 by reversing the output of the reverse reduction transmission 11 and performing low speed navigation, which allows the watercraft 1 to travel at a low speed. In the case where the distance between the hull 2 and the obstacle 70 located approximately in the travel direction of the watercraft 1 is less than the predetermined distance *Dth* and the travel speed of the watercraft 1 is greater than a predetermined speed *Vth*, the controller 40 stops the hull 2 by reversing the output of the reverse reduction transmission 11 and performing normal navigation, which allows the watercraft 1 to travel at a high speed.

The controller 40 is configured to change the travel speed for stopping the hull 2 based on the distance to an obstacle 70, and therefore, in the case where the distance to the obstacle is large, optimal watercraft steering operation is achieved based on the travel mode of the watercraft 1 and its positional relationship with the obstacle 70. On the other hand, in the case where the distance to the obstacle 70 is small, collision with the obstacle 70 can be avoided by an emergency action, namely by quickly stopping the hull 2, and therefore safe navigation is achieved.

Furthermore, the controller 40 is configured to change the travel speed for stopping the hull 2 based on the travel speed of the watercraft 1, and therefore, in the case where the travel speed is low and the watercraft 1 is approaching the obstacle 70 slowly, optimal watercraft steering operation is achieved based on the travel mode of the watercraft 1 and its positional relationship with the obstacle 70. On the other hand, in the case where the travel speed is high and the watercraft 1 is approaching the obstacle quickly, collision with the obstacle 70 can be avoided by an emergency action, namely by quickly stopping the hull 2, and therefore safe navigation is achieved.

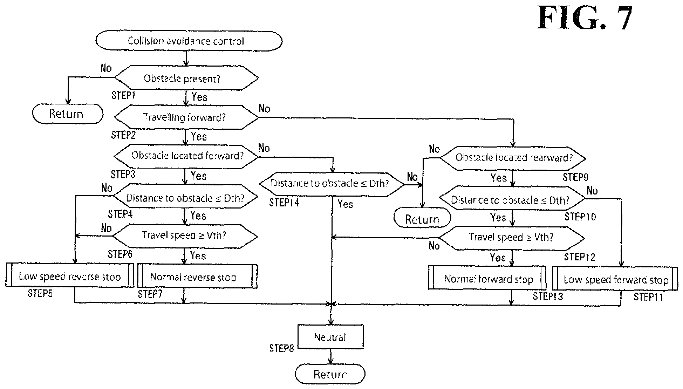

The flowchart of FIG. 7 illustrates the operation of the controller 40 as follows: upon identification of an obstacle 70 by a signal from the radar units 45 (Yes in STEP 1), in the case where the travel direction of the watercraft 1 is a forward direction (Yes in STEP 2) and the obstacle 70 is located forward of the hull 2 (in a location forward of the hull 2 or a location left and forward or right and forward of the hull 2) (YES in STEP 3), and in the case where the distance to the obstacle 70 is greater than the predetermined distance *Dth* (No in STEP 4), the controller 40 reverses the travel direction of the watercraft 1 to a reverse direction and performs low speed navigation, so as to stop the hull 2 (STEP 5). That is, in the case where the watercraft 1 is approaching an obstacle 70 located far from the hull 2, regardless of the forward travel speed of the watercraft 1, the reverse travel of the watercraft 1 is controlled via low speed navigation. This is achieved by causing the reverse reduction transmission 11 to engage the relay clutch 50 and the HST clutch 66 and set a swash plate angle of the hydraulic pump 61 so as to stop the hull 2 (low speed reverse stop). The setting may be such that the reverse travel speed of the watercraft 1 increases proportionally to the decrease in the distance to the obstacle 70. Once the hull 2 has been stopped, the controller 40 places the reverse reduction transmission 11 in a neutral mode by placing all the forward clutch 16, the reverse clutch 17, the relay clutch 50, and the HST clutch 66 in the disengaged state (STEP 8).

In the case where the watercraft 1 is traveling in a forward direction and the distance to an obstacle 70 located forward of the hull 2 decreases to or below the predetermined distance *Dth* (Yes in STEP 4), the controller 40 sets a reverse travel speed of the watercraft 1 based on the travel speed of the watercraft 1 (STEPs 5 to 7). If the travel speed of the watercraft 1 is lower than the predetermined speed *Vth* (No in STEP 6), the controller 4 reverses the travel direction of the watercraft 1 to a reverse direction and performs low speed navigation to stop the hull 2 (STEP 5). On the other hand, if the travel speed of the watercraft 1 is equal to or higher than the predetermined speed *Vth* (Yes in STEP 6), the controller 4 reverses the travel direction of the watercraft 1 to a reverse direction and performs normal navigation to stop the hull 2 (STEP 7).

That is, in the case where the forward travel speed of the watercraft 1 is high and the watercraft 1 is quickly approaching an obstacle 70 located near the hull 2, the reverse travel of the watercraft 1 is controlled via normal navigation. This is achieved by causing the reverse reduction transmission 11 to engage the reverse clutch 17 and set an output rotational speed of the engine 10 so as to stop the hull 2 (normal reverse stop). On the other hand, in the case where the forward travel speed of the watercraft 1 is low, the reverse travel of the watercraft 1 is controlled via low speed navigation. This is achieved by causing the reverse reduction transmission 11 to engage the relay clutch 50 and the HST clutch 66 and set a swash plate angle of the hydraulic pump 61 so as to stop the hull 2 (low speed reverse stop). The setting may be such that the reverse travel speed of the watercraft 1 increases proportionally to the decrease in the distance to the obstacle 70. Furthermore, in the case of stopping the hull 2 via normal navigation, the stopping of the hull 2 may be carried out by reverse travel at a maximum speed (full speed reverse ravel) regardless of the distance to the obstacle 70. Once the hull 2 has been stopped, the controller 40 places the reverse reduction transmission 11 in the neutral mode (STEP 8).

Furthermore, the controller 40 operates as follows: in the case where the watercraft 1 is traveling in a reverse direction (No in STEP 2) and the obstacle 70 is located rearward of the hull 2 (in a location rearward of the hull 2 or a location left and rearward or right and rearward of the hull 2) (YES in STEP 9) and further in the case where the distance to the obstacle 70 is greater than the predetermined distance *Dth* (No in STEP 10), the controller 40 reverses the travel direction of the watercraft 1 to a forward direction and performs low speed navigation, so as to stop the hull 2 (STEP 11). That is, in the case where the watercraft 1 is approaching an obstacle 70 located far from the hull 2, regardless of the reverse travel speed of the watercraft 1, the forward travel of the watercraft 1 is controlled via low speed navigation so as to stop the hull 2 (low speed forward stop). The setting may be such that the forward travel speed of the watercraft 1 increases proportionally to the decrease in the distance to the obstacle 70. Once the hull 2 has been stopped, the controller 40 places the reverse reduction transmission 11 in the neutral mode (STEP 8).

In the case where the watercraft 1 is traveling in a reverse direction and the distance to an obstacle 70 located rearward of the hull 2 decreases to or below the predetermined distance *Dth* (Yes in STEP 10), the controller 40 sets a forward travel speed of the watercraft 1 based on the travel speed of the watercraft 1 (STEPs 11 to 13). If the travel speed of the watercraft 1 is lower than the predetermined speed *Vth* (No in STEP 12), the controller 4 places the reverse reduction transmission 11 in the neutral mode (STEP 8). By this means, in the case where the obstacle 70 is located near the stem of the hull 2, the obstacle 70 is prevented from being caught by the propeller 5 as a result of stopping the rotation of the propeller 5, which is disposed adjacent to the stem at the bottom. On the other hand, if the travel speed of the watercraft 1 is equal to or higher than the predetermined speed *Vth* (Yes in STEP 12), the controller 4 reverses the travel direction of the watercraft 1 to a forward direction and performs normal navigation, so as to stop the hull 2 (STEP 13).

That is, in the case where the reverse travel speed of the watercraft 1 is high and the watercraft 1 is quickly approaching an obstacle 70 located near the hull 2, the forward travel of the watercraft 1 is controlled via normal navigation. This is achieved by causing the reverse reduction transmission 11 to engage the forward clutch 16 and set an output rotational speed of the engine 10 so as to stop the hull 2 (normal forward stop). The setting may be such that the forward travel speed of the watercraft 1 increases proportionally to the decrease in the distance to the obstacle 70, or such that, regardless of the distance to the obstacle 70, forward travel at a maximum speed (full speed forward travel) is performed to stop the hull 2. Once the hull 2 has been stopped, the controller 40 places the reverse reduction transmission 11 in the neutral mode (STEP 8).

In the case where the watercraft 1 is traveling in a forward direction and the obstacle 70 is located rearward of the hull 2 (No in STEP 3), and the distance to the obstacle 70 decreases to or below the predetermined distance *Dth* (Yes in STEP 14), the controller 40 places the reverse reduction transmission 11 in the neutral mode (STEP 8). By this means, in the case where the obstacle 70 is located near the stem of the hull 2, the obstacle 70 is prevented from being caught by the propeller 5 as a result of stopping the rotation of the propeller 5, which is disposed adjacent to the stem at the bottom. On the other hand, in the case where the watercraft 1 is traveling in a forward direction and the distance to the obstacle 70 located rearward of the hull 2 is greater than the predetermined distance *Dth* (No in STEP 14), or in the case where the watercraft 1 is traveling in a reverse direction and an obstacle 70 is identified in a location forward of the hull 2 (No in STEP 9), the controller 40 maintains the current travel mode of the watercraft 1.

When switching to the low speed reverse stop mode in STEP 5, the normal reverse stop mode in STEP 7, the low speed forward stop mode in STEP 11, or the normal forward stop mode in STEP 13, the controller 40 instructs the output interface 48 to announce a warning indicating that an obstacle 70 is present approximately in the travel direction of the watercraft 1. The controller 40 may instruct the output interface 48 to announce the next operating mode and may instruct the output interface 48 to display the distance to the obstacle 70 and the speed of the watercraft 1 relative to the obstacle 70. The controller 40 may enable the operator to visually ascertain the possibility of collision with an obstacle 70 by, upon identification of the obstacle 70 in STEP 1, displaying the travel direction and travel speed of the watercraft 1, and the distance, relative position, and relative speed of the obstacle 70 with respect to the hull 2.

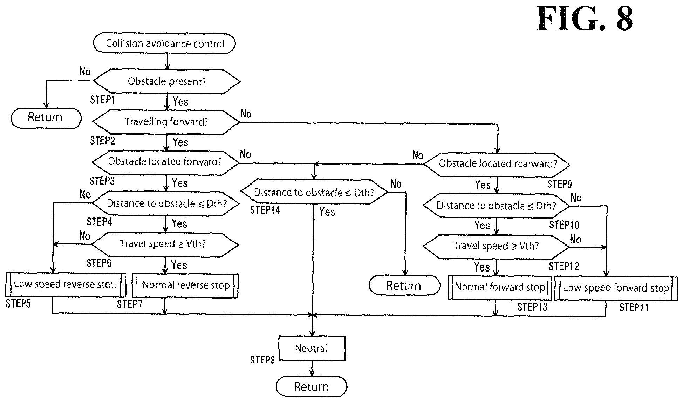

Next, collision avoidance control by a watercraft steering system, according to the second embodiment, of the watercraft 1, will be described below with reference to the flowchart of FIG. 8. FIG. 8 illustrates this embodiment as follows: in the case where the watercraft 1 is traveling in a reverse direction and the distance to an obstacle 70 located rearward of the hull 2 decreases to or below the predetermined distance *Dth* (Yes in STEP 10), and further the travel speed of the watercraft 1 is lower than the predetermined speed *Vth* (No in STEP 12), the controller 40 reverses the travel direction of the watercraft 1 to a forward direction and performs low speed navigation, so as to stop the hull 2 (STEP 11).

That is, in the case where the reverse travel speed of the watercraft 1 is low and the watercraft 1 is slowly approaching an obstacle 70 located near the hull 2, the forward travel of the watercraft 1 is controlled via low speed navigation so as to stop the hull 2 (low speed forward stop). The setting may be such that the forward travel speed of the watercraft 1 increases proportionally to the decrease in the distance to the obstacle 70. Once the hull 2 has been stopped, the controller 40 places the reverse reduction transmission 11 in the neutral mode (STEP 8).

In the case where the watercraft 1 is traveling in a forward direction and the obstacle 70 is located rearward of the hull 2 (No in STEP 3), or in the case where the watercraft 1 is traveling in a reverse direction and the obstacle 70 is located forward of the hull 2 (No in STEP 9), and further in the case where the distance to the obstacle 70 decreases to or below the predetermined distance *Dth* (Yes in STEP 14), the controller 40 places the reverse reduction transmission 11 in the neutral mode (STEP 8). That is, in the case where the obstacle 70 is located opposite from the travel direction of the watercraft 1 and the distance to the obstacle 70 is decreased, the reverse reduction transmission 11 is placed in the neutral mode to allow the watercraft 1 to coast.

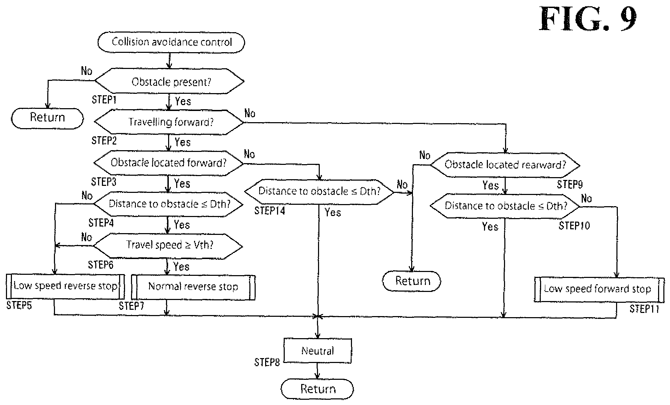

Next, collision avoidance control by a watercraft steering system, according to the third embodiment, of the watercraft 1, will be described below with reference to the flowchart of FIG. 9. FIG. 9 illustrates this embodiment as follows: in the case where the watercraft 1 is traveling in a reverse direction and the distance to an obstacle 70 located rearward of the hull 2 decreases to or below the predetermined distance *Dth* (Yes in STEP 10), the controller 40 places the reverse reduction transmission 11 in the neutral mode (STEP 8). That is, in the case where the watercraft 1 is approaching an obstacle 70 located near the hull 2, regardless of the reverse travel speed of the watercraft 1, the reverse reduction transmission 11 is placed in the neutral mode to allow the watercraft 1 to coast.

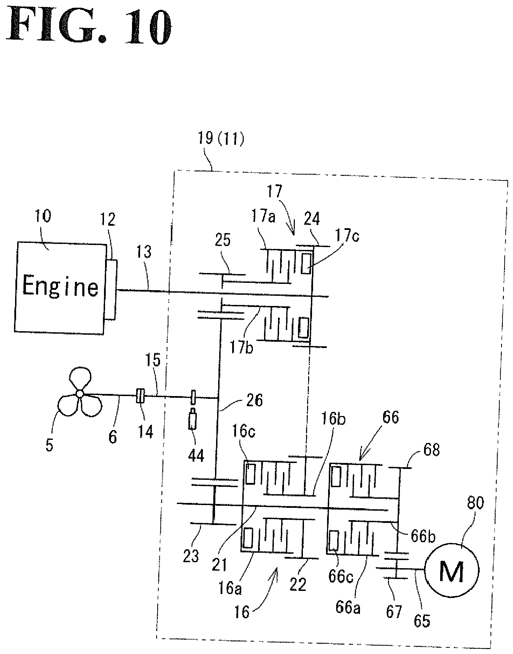

It should be noted that the construction of the parts in the present invention is not limited to the illustrated embodiments, and various modifications may be made without departing from the scope of the present invention. For example, in place of the hydrostatic transmission 60, an electric motor 80 may be used as a drive source for low speed navigation as illustrated in FIG. 10.

### [Description of the Reference Numeral]

- 1: pleasure boat (watercraft)
- 2: hull
- 5: propeller
- 7: forward-reverse lever
- 8: trolling lever
- 9: throttle lever
- 10: engine (main engine)
- 11: reverse reduction transmission
- 15: output shaft
- 16: forward clutch
- 17: reverse clutch
- 18: forward-reverse switching mechanism
- 40: controller
- 41: forward-reverse potentiometer
- 42: trolling potentiometer
- 43: throttle potentiometer
- 44: rotation sensor
- 45: radar unit
- 46: GPS unit
- 47: input interface
- 48: output interface
- 49: external device
- 50: relay clutch
- 55: swash plate controller
- 60: hydrostatic transmission
- 61: hydraulic pump
- 62: hydraulic motor
- 66: HST clutch
- 80: electric motor

## Claims

1. A watercraft steering system comprising:
a reverse reduction transmission (11) configured to convert power from a main engine (10) into an output for causing a watercraft (1) to make forward travel, neutral, or reverse travel, so as to control navigation of the watercraft (1); and
an obstacle detector (45) disposed at a hull (2) of the watercraft (1) and configured to detect an obstacle (70),
the watercraft steering system being configured to, based on a location of the obstacle (70) with respect to the hull (2), a travel direction of the watercraft (1), a travel speed of the watercraft (1), and a distance between the hull (2) and the obstacle (70), select from among the forward travel, the neutral, and the reverse travel, and maintain the travel speed or change the travel speed.

2. The watercraft steering system according to claim 1, wherein, when the obstacle (70) is detected to be approximately in the travel direction of the watercraft (1), the watercraft steering system is configured to reverse a rotational output of the reverse reduction transmission (11) and change the travel speed of the watercraft (1) to a travel speed according to the distance between the hull (2) and the obstacle (70) and according to the travel speed of the watercraft (1), so as to stop the hull (2).

3. The watercraft steering system according to claim 2, wherein, when the distance between the hull (2) and the obstacle (70) located approximately in the travel direction of the watercraft (1) is greater than a predetermined distance, the watercraft steering system is configured to stop the hull (2) by reversing the output of the reverse reduction transmission (11) and performing low speed navigation, the low speed navigation allowing the watercraft (1) to travel at a low speed.

4. The watercraft steering system according to claim 2, wherein, when the distance between the hull (2) and the obstacle (70) located approximately in the travel direction of the watercraft (1) is less than a predetermined distance and the travel speed of the watercraft (1) is greater than a predetermined speed, the watercraft steering system is configured to stop the hull (2) by reversing the output of the reverse reduction transmission (11) and performing normal navigation, the normal navigation allowing the watercraft (1) to travel at a high speed.

5. The watercraft steering system according to claim 1, wherein the reverse reduction transmission (11) comprises
a forward-reverse switching mechanism (18) configured to convert the power from the main engine (10) into an output for causing the watercraft (1) to make forward travel, neutral, or reverse travel in normal navigation, and
a low speed navigation mechanism configured to set an output for causing the watercraft (1) to make forward travel, neutral, or reverse travel in low speed navigation.

6. The watercraft steering system according to claim 1, further comprising a GPS unit (46) configured to identify a location of the watercraft (1) via satellite communication,
wherein, with reference to a predetermined route, the watercraft steering system is configured to control the main engine (10) and the reverse reduction transmission (11) so as to navigate the watercraft (1) at a travel speed, the travel speed being a travel speed of the watercraft (1) at the location detected by the GPS unit (46).

7. A watercraft comprising a controller (40) in a hull (2), the controller (40) comprising the watercraft steering system according to any one of claims 1 to 6.
